Europäisches Patentamt

European Patent Office

Office européen des brevets

(19)

(11) **EP 1 330 087 A2**

(12) **EUROPEAN PATENT APPLICATION**

(43) Date of publication:
**23.07.2003 Bulletin 2003/30**

(51) Int Cl.$^7$: **H04L 27/26**

(21) Application number: **03000605.0**

(22) Date of filing: **14.01.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **17.01.2002 KR 2002002799**

(71) Applicant: **SAMSUNG ELECTRONICS CO., LTD.**
**Suwon-City, Kyungki-do (KR)**

(72) Inventor: **Jeong, Hae-joo**
**Mafo-gu, Seoul (KR)**

(74) Representative: **Grünecker, Kinkeldey,**
**Stockmair & Schwanhäusser Anwaltssozietät**
**Maximilianstrasse 58**
**80538 München (DE)**

(54) **Symbol timing recovery for multicarrier receivers**

(57)      A symbol timing recovering apparatus of an orthogonal frequency division multiplexing (OFDM) receiver includes an offset detecting unit for detecting a symbol timing offset from an OFDM signal which is fast Fourier transformed; a factor computing unit for multiplying a first symbol timing offset by a first weight factor and a second symbol timing offset by a second symbol timing offset, and adding and outputting products of multiplications, the first and second symbol timing offset sequentially input from the offset detecting unit; a distortion detecting unit for detecting an inter-symbol interference and a sampling offset value of the OFDM signal due to an environment of a transmitting channel, based on the outputs from the factor computing unit; a window adjusting unit for adjusting a window timing of the symbol of the OFDM signal based on the inter-symbol interference; and an interpolator for correcting the sampling timing of the OFDM signal based on the sampling offset value.

FIG.1

EP 1 330 087 A2

## Description

The present invention generally relates to a symbol timing recovering apparatus of orthogonal frequency division multiplexing (OFDM) receiver, and more particularly, it relates to a symbol timing recovering apparatus of an OFDM receiver capable of compensating for an offset that has occurred in the process of recovering the received OFDM signal.

A broadcasting system for a digital television (DTV) largely includes an image encoding unit and modulating unit. The image encoding unit compresses the digital data approximately of IGbps from an image source into data approximately of 15~18Mbps. The modulating unit transmits the digital data of tens of Mbps to a receiving side via a limited band channel approximately of 6~8MHz.

The broadcasting system for DTV usually adopts a terrestrial broadcasting that uses the channels in the very high frequency (VHF)/ultra high frequency (UHF) that are allocated for the existent television broadcasting. Accordingly, modulation for the broadcasting system of the DTV has to satisfy the following conditions in consideration of the environment of the terrestrial broadcasting:

First, the modulation for the broadcasting system of DTV has to have high spectrum efficiency so that digital data of tens of Mbps can be transmitted via the limited band channel of 6~8 MHz. Second, the modulation for the broadcasting system of the DTV has to have robustness toward the fading, as multipath fading occurs due to the presence of surrounding structures and buildings. Third, the modulation for the broadcasting system of DTV has to have robustness to the co-channel interference, which always occurs with the existent television signal. Finally, the modulated signal for the DTV broadcasting system has to minimize the interference with the existent analogue television receiver.

As for the modulation that could satisfy the above conditions, there generally are used a quadrature amplitude modulation (QAM) and a vestigial sideband (VSB) modulation.

The European countries adopted an orthogonal frequency division multiplexing (OFDM) as the next generation terrestrial broadcasting system for the DTV, which is the digital modulation system that could provide effects such as the increase of transmission rate per bandwidth and prevention of interference.

The OFDM system transforms the sequence of symbols input in series into parallel data, and then multiplexes the parallel symbols into different subcarrier frequencies. The OFDM system uses multicarrier, and is distinguished from the conventional systems that use single carrier. The multicarriers have orthogonality among themselves. Accordingly, multiplication of two carriers would render value '0', and this is one of the required conditions for using the multicarrier. The OFDM system consists of a fast Fourier transform (FFT) unit and an inverse fast Fourier transform (IFFT) unit, which can be simply achieved by the orthogonality among the carriers and the definition of the FFT.

The advantages of the OFDM system are as follows:

The television terrestrial transmission method has channel characteristics in which the transmission performance is influenced by the reflective wave occurring in the signal transmission, co-channel and inter-channel interferences. Accordingly, the requirements for designing the transmission system are quire complex. The OFDM system, in contrast, are robust toward the multipath environment. As the OFDM system uses plural carriers, the symbol transmission time is lengthened. Accordingly, it becomes immune to the interference signal occurring by the multipath environment, and even to the echo signal which lasts relatively longer than others. The OFDM system is also robust to the existent signal, and thus less influenced by the co-channel interference. With these characteristics, the OFDM system can construct a signal frequency network (SFN). The SFN means one broadcasting performs nationwide broadcasting with a single frequency. In the SFN, the co-channel interference gets severer, however, the OFDM system can be used as it is robust to these environments. With the use of the SFN, a limited frequency resource can be utilized.

Meanwhile, the OFDM signal consists of multicarriers, each of which has a relatively narrow band. As the overall shape of the spectrum is substantially square, the frequency efficiency is greater than the single carrier. Another advantage of the OFDM system is that, as it has the waveform identical to the White Gaussian noise, it has less interference when compared to other type of broadcasting services such as phase alternation by line (PAL) or sequential couleur a memoire (SECAM). With the OFDM system, various modulations can be used for each carrier, and accordingly, hierarchal transmission is possible.

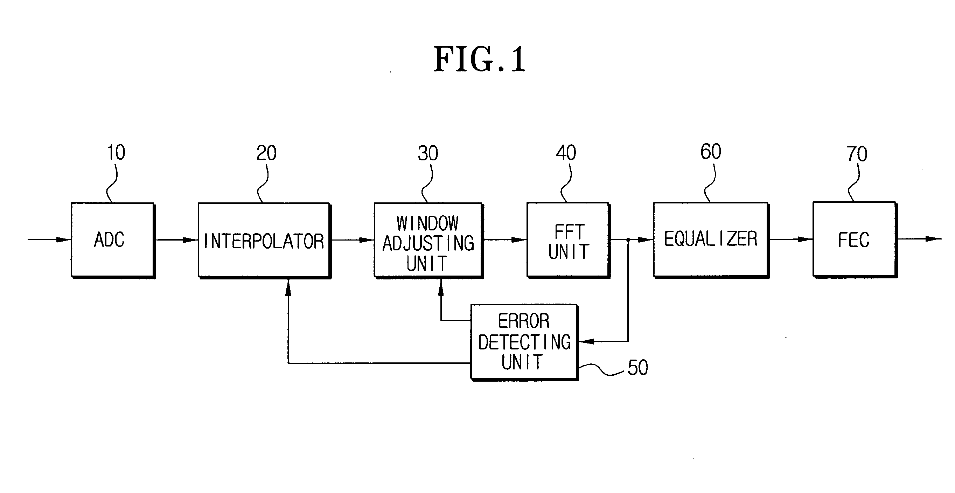

FIG. 1 is a block diagram showing the conventional OFDM receiver. The OFDM receiver includes an analogue-to-digital converter (ADC) 10, an interpolator 20, a window adjusting unit 30, a fast Fourier transforming (FFT) unit 40, an error detecting unit 50, an equalizer 60 and a forward error corrector (FEC) 70.

The ADC 10 converts received OFDM signal into digital signal through the processes of sampling, quantization and coding. The interpolator 20 compensates the decimal times symbol timing offset of the OFDM signal. The window adjusting unit 30 compensates for integer times symbol timing offset of the OFDM signal. The FFT unit 40 fast Fourier transforms the OFDM signal of the compensated decimal times and integer times symbol timing offsets. The error detecting unit 50 detects the symbol timing offset of the OFDM signal generated during the sampling of the OFDM signal at the ADC 10 into digital signal. The error detecting unit 50 provides the interpolator 20 and the window adjusting unit 30 with the detected symbol timing offset values. The equalizer 60 compensates for the distortion occurring in the transmitting channel with respect to the fast Fourier transformed OFDM signal from the FFT unit 40. The equalizer 60 compensates for the distortion in the transmitting channel of the OFDM signal, by calculating the timing and frequency error of the symbol of the OFDM signal through the pilot signal. The FEC 70 detects the error by the error detecting method set for the data of the OFDM signal, and corrects the detected error.

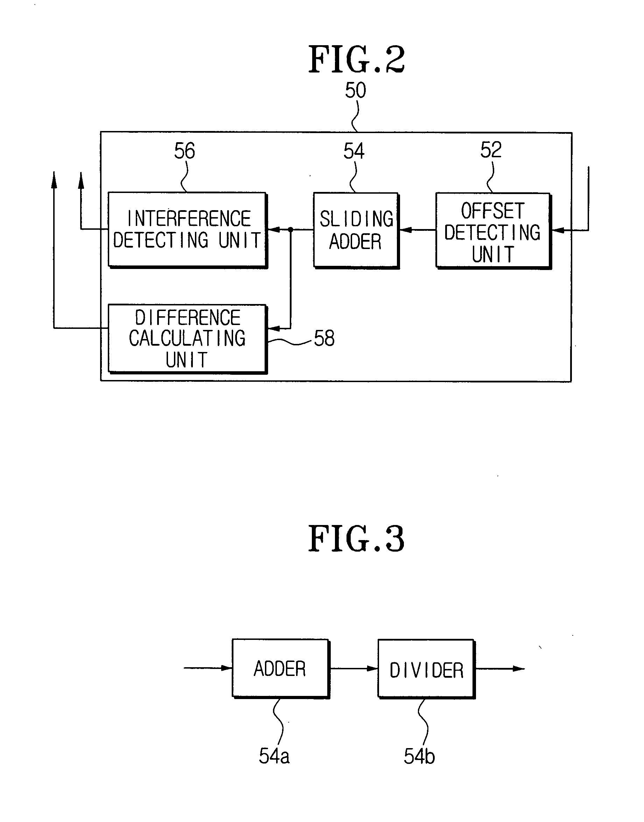

FIG. 2 is a block diagram showing the error detecting unit 50 of FIG. 1 in greater detail. The error detecting unit 50 includes an offset detecting unit 52, a sliding adder 54, an interference detecting unit 56 and a different calculating unit 58.

The offset detecting unit 52 detects the symbol timing offset generated from the ADC 10. The sliding adder 54 calculates an average of a certain n number of symbol timing offsets detected and sliding-output from the offset detecting unit 52. The calculation at the sliding adder 54 is expressed by the following mathematical expressions:

[Mathematical expressions 1]

$$y_1 = \frac{x_1 + x_2 + x_3 + x_4 \ldots + x_n}{n}$$

$$y_2 = \frac{x_1' + x_2' + x_3' + x_4' \ldots + x_n'}{n}$$

By the mathematical expressions 1, the sliding adder 54 calculates averages ($y_1, y_2$) of the symbol timing offsets detected and sliding-output from the offset detecting unit 52, for n number of symbol timing offsets at a time. The interference detecting unit 56 detects inter-symbol interference (ISI) of the OFDM signal. The interference detecting unit 56 uses the averages ($y_1, y_2$) as offset values for detecting the ISI. The information about the ISI detected by the interference detecting unit 56 is integer. The interference detecting unit 56 provides the window adjusting unit 30 with the offset value, i.e., the information about the detected inter-symbol interference. The window adjusting unit 30 adjusts the window timing for FFT of the OFDM signal based on the offset value provided by the interference detecting unit 56. The offset value is positive '+', the window adjusting unit 30 determines there is inter-symbol interference, and accordingly adjusts the window timing for the FFT. When the offset value is negative '-', the window adjusting unit 30 determines that there is no inter-symbol interference.

As expressed by the following mathematical expression 2, the difference calculating unit 58 calculates a difference of the averages $y_1, y_2$ which are calculated by the sliding adder 54. The difference is a decimal.

[Mathematical expression 2]

$$D = y_2 - y_1$$

The difference calculating unit 58 provides the interpolator 20 with the difference D of the averages $y_1, y_2$. Based on the difference D provided by the difference calculating unit 58, the interpolator 20 compensates for the symbol timing of the OFDM signal occurring in the sampling by the ADC 10.

FIG. 3 is a block diagram showing the sliding adder 54 of FIG. 2 in greater detail. The sliding adder 54 has an adder 54a and a divider 54b. The adder 54a adds n number of the symbol timing offsets detected and sliding-output from the offset detecting unit 52 at a time. The divider 54b divides the sums of the symbol timing offsets added up by the adder 54a by number 'n'.

As described above, the conventional symbol timing recovery apparatus of OFDM receiver adjusts the symbol timing of the OFDM signal and the window timing for FFT based on the averages $y_1, y_2$ of the symbol timing offsets calculated with n number of symbols.

Meanwhile, in order to increase the accuracy of offset detection, the sliding adder 54 can perform the adding and dividing operations with more than n number of symbol timing offsets at a time. This, however, causes increase of price and volume of the product, while the operation by the sliding adder 54 becomes complex and the bit length by adding operation increases. If the sliding adder 54 performs the adding and dividing operations with three, or less than three symbol timing offsets, the price and volume of the product may decrease. However, the difference of the averages is widened, causing the greater error of the symbol timing offsets. Furthermore, as the difference of the averages is even more widened in the dynamic channel environment, the compensation for the symbol timing offset is not performed properly.

Accordingly, it is an aspect of the present invention to provide a symbol timing recovery apparatus of an OFDM receiver capable of recovering symbol timing stable either in a static channel environment or in a dynamic channel environment, and a method thereof.

The above aspect is accomplished by a symbol timing recovering apparatus of an orthogonal frequency division multiplexing (OFDM) receiver according to the present invention, including an offset detecting unit for detecting a symbol timing offset from an OFDM signal which is fast Fourier transformed; a factor computing unit for multiplying a first symbol timing offset by a first weight factor and a second symbol timing offset by a second symbol timing offset, and adding and outputting products of multiplications, the first and second symbol timing offset sequentially input from the offset detecting unit; a distortion detecting unit for detecting an inter-symbol interference and a sampling offset value of the OFDM signal due to an environment of a transmitting channel, based on the outputs from the factor computing unit; a window adjusting unit for adjusting a window timing of the symbol of the OFDM signal based on the inter-symbol interference; and an interpolator for correcting the sampling timing of the OFDM signal based on the sampling offset value.

The distortion detecting unit includes an interference detecting unit for detecting an integer value corresponding to the respective inter-symbol interference of the OFDM signals with the outputs from the factor computing unit as an offset value, and providing the window adjusting unit with the detected integer value; and a sampling offset detecting unit for calculating a decimal value corresponding to the sampling offset occurring in the process of sampling by calculating a difference of the outputs which are sequentially input to the sampling offset detecting unit, and providing the interpolator with the decimal value.

The sampling offset detecting unit includes a delaying unit for delaying a first output of the outputs for a predetermined time before outputting the first output and until a second output of the outputs is input, the second output following the first output; a subtracting unit for calculating the decimal value corresponding to the sampling offset value by subtracting the first output, delayed by the delaying unit, from the second output; and a loop filter for counterbalancing the decimal value within a predetermined limit so that decimal values sequentially calculated by the subtracting unit can be maintained at an even interval.

The factor computing unit includes a register for storing a first symbol timing offset for a predetermined time before outputting and until a second symbol timing offset is input, the second symbol timing offset following the first symbol timing offset; a first multiplier for multiplying the second symbol timing offset by the first weight factor; a second multiplier for multiplying the first symbol timing offset from the register by the second weight factor; an adder for calculating the outputs by adding the products from first and second multipliers, and outputting the calculated outputs to outside and bypassing to the register; and a switching unit for outputting an initial input of the symbol timing offset to outside and bypassing to the register in accordance with a control signal.

The sum of first and second weight factors is '1', and the first and second weight factors are equal to, or greater than '0', and equal to, or less than '1'.

According to the present invention, an orthogonal frequency division multiplexing (OFDM) receiver includes an analogue-to-digital converter (ADC) for converting received OFDM signals into digital signals; a fast Fourier transforming (FFT) unit for fast Fourier transforming the digitalized OFDM signals; an offset detecting unit for detecting a symbol timing offset of the fast Fourier transformed OFDM signals; a factor computing unit for multiplying a first symbol timing offset by a first weight factor and a second symbol timing offset by a second symbol timing offset, and adding and outputting products of multiplication, the first and second symbol timing offset sequentially input from the offset detecting unit; a distortion detecting unit for detecting an inter-symbol interference and a sampling offset value of the OFDM signal based on the outputs from the factor computing unit; a window adjusting unit for adjusting a window timing of the symbol of the OFDM signal based on the inter-symbol interference; and an interpolator for correcting the sampling timing of the OFDM signal based on the sampling offset value.

The distortion detecting unit includes an interference detecting unit for detecting an integer value corresponding to the inter-symbol interference of the respective OFDM signals with the outputs from the factor computing unit as an offset value, and providing the window adjusting unit with the detected integer value; and a sampling offset detecting unit for calculating a decimal value corresponding to the sampling offset occurring in the process of sampling by calculating a difference of the outputs which are sequentially input to the sampling offset detecting unit, and providing the interpolator with the decimal value.

The sampling offset detecting unit includes a delaying unit for delaying a first output of the outputs for a predetermined time before outputting the first output and until a second output of the outputs is input, the second output following the first output; a subtracting unit for calculating the decimal value corresponding to the sampling offset value by subtracting the first output, delayed by the delaying unit, from the second output; and a loop filter for counterbalancing the decimal value within a predetermined limit so that decimal values sequentially calculated by the subtracting unit can be maintained at an even interval.

The factor computing unit includes a register for storing a first symbol timing offset for a predetermined time before outputting and until a second symbol timing offset is input, the second symbol timing offset following the first symbol timing offset; a first multiplier for multiplying the second symbol timing offset by the first weight factor; a second multiplier for multiplying the first symbol timing offset from the register by the second weight factor; an adder for calculating the outputs by adding the products from first and second multipliers, and outputting the calculated outputs to outside and bypassing to the register; and a switching unit for outputting an initial input of the symbol timing offset to outside and bypassing to the register in accordance with a control signal.

According to the present invention, a symbol timing recovering method using a symbol timing recovering apparatus according to the present invention includes the steps of: a) detecting a symbol timing offset from an OFDM signal which is fast Fourier transformed; b) multiplying a first symbol timing offset by a first weight factor and a second symbol timing offset by a second symbol timing offset, and adding and outputting products of multiplication, the first and second symbol timing offset sequentially input from the offset detecting unit; c) detecting an inter-symbol interference and a sampling offset value of the OFDM signal due to an environment of a transmitting channel, based on the outputs from the factor computing unit, and d) adjusting a window timing of the symbol of the OFDM signal based on the inter-symbol interference, and correcting the sampling timing of the OFDM signal based on the sampling offset value.

The step c) includes the steps of: detecting an integer value corresponding to the inter-symbol interference of the respective OFDM signals with the outputs from the factor computing unit as an offset value; and calculating a decimal value corresponding to the sampling offset occurring in the process of sampling by calculating a difference of the outputs which are sequentially input to the sampling offset detecting unit.

The decimal value calculating step comprises the steps of: delaying a first output of the outputs for a predetermined time before outputting the first output and until a second output of the outputs is input, the second output following the first output; calculating the decimal value corresponding to the sampling offset value by subtracting the first output from the second output; and counterbalancing the decimal value within a predetermined limit.

The step b) comprises the steps of: storing a first symbol timing offset for a predetermined time before outputting and until a second symbol timing offset is input, the second symbol timing offset following the first symbol timing offset; multiplying the second symbol timing offset by the first weight factor; multiplying the first symbol timing offset from the register by the second weight factor; and calculating the outputs by adding the products from first and second multipliers, and outputting the calculated outputs to outside and storing the same for a predetermined time according to the storing step.

According to the present invention, the two neighboring symbol timing offsets of the symbol timing offsets detected by the offset detecting unit 510 are multiplied respectively by two factors which are in crossfade relation with each other. The products of the multiplications are added up. Based on the sum such obtained, the value for adjusting the sampling offset and the FFT window timing can be computed. As a result, the error among the respective symbol offsets for the compensation in accordance with the change in the transmitting channel can be reduced.

The above-mentioned aspect and the feature of the present invention will be more apparent by describing the preferred embodiment of the present invention by referring to the appended drawings, in which:

FIG. 1 is a block diagram showing an exemplary of a conventional OFDM receiver;
FIG. 2 is a block diagram showing the error detecting unit of FIG. 1 in greater detail;
FIG. 3 is a block diagram showing the sliding adder of FIG. 2 in greater detail;
FIG. 4 is a block diagram showing a symbol timing recovering apparatus of an OFDM receiver according to a preferred embodiment of the present invention;
FIG. 5 is a block diagram showing the factor computing unit of FIG. 4 in greater detail;
FIG. 6 is a flowchart showing a symbol timing recovering method of an OFDM signal, using the symbol timing recovering apparatus of the OFDM receiver according to the present invention;
FIG. 7 is a flowchart showing the factor computing unit operating in accordance with the first and second symbol timing offsets input from the offset detecting unit in S200 of FIG. 6; and
FIG. 8 is a flowchart showing the factor computing unit operating in accordance with the third symbol timing offset input from the offset detecting unit after S250 of FIG. 7.

From now on, the present invention will be described in greater detail by referring to the appended drawings.

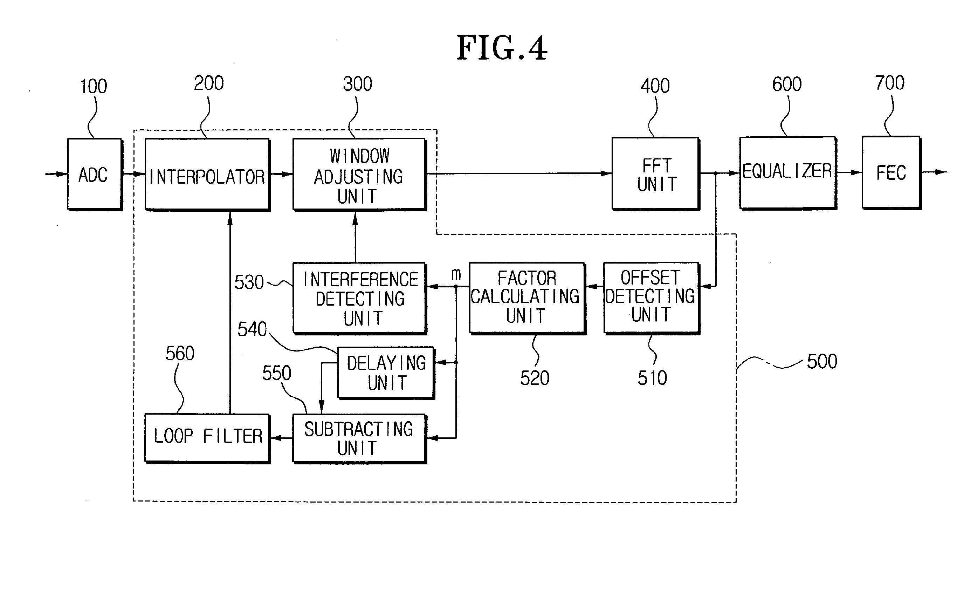

FIG. 4 is a block diagram showing the symbol timing recovering apparatus of the OFDM receiver according to a preferred embodiment of the present invention. Prior to the symbol timing recovering apparatus, the OFDM receiver will be described briefly.

The OFDM receiver includes an analogue-to-digital converter (ADC) 100, a symbol timing recovering apparatus 500, a fast Fourier transforming (FFT) unit 400, an equalizer 600 and a forward error corrector (FEC) 700.

The ADC 100 converts received OFDM signals into digital signal through the processes of sampling, quantization and coding. The symbol timing recovering apparatus 500 adjusts sampling offsets occurring in the sampling of the ADC 100, and window timing offsets occurring in the Fourier transforming for recovering the OFDM signals. The FFT unit 400 fast Fourier transforms the OFDM signals in accordance with the window timing adjusted by the symbol timing recovering apparatus 500. The equalizer 600 compensates for the distortions occurring in the transmitting channel with respect to the OFDM signals which are fast Fourier transformed and then output from the FFT unit 400. By calculating the timing error and frequency error of the symbol of the OFDM signal occurring in the transmitting channel through the pilot signal, the equalizer 600 compensates for the distortions in the transmitting channel of the OFDM signals. The FEC 70 detects the error with respect to the data of the OFDM signals with a predetermined error detecting method, and corrects the detected error of the data.

Meanwhile, the symbol timing recovering apparatus 50 of the OFDM receiver detects the sampling offsets of the OFDM signals occurring in sampling of the ADC 100 and the window timing offsets of the FFT unit 400, and provides the interpolator 200 and the window adjusting unit 300 with the detected results. Such symbol timing recovering apparatus 500 includes an offset detecting unit 510, a factor computing unit 520, an interference detecting unit 530, a delaying unit 540, a subtracting unit 550, a loop filter 560, an interpolator 200 and a window adjusting unit 300.

The offset detecting unit 510 detects a symbol timing offset of the OFDM signal occurring in the sampling process of the ADC 100 converting the OFDM signals into the digital signals. Among the symbol timing offsets detected by the offset detecting unit 510 for each OFDM signal, the factor computing unit 520 multiplies one symbol timing offset and the neighboring symbol timing offset by corresponding factors respectively, adds the two products of multiplications and outputs the resultant values. The factors applied to the one and the neighboring symbol timing offsets are in 'crossfade' relation with each other that the sum thereof would always render value '1'. By the crossfade relation, the sum of two factors always render a value '1'. In other words, if one factor is 0.2, the other one would be 0.8.

The interference detecting unit 530 detects inter-symbol interference (ISI) of the OFDM signal, with the output value m from the factor computing unit 520 as an offset value. The ISI detected by the interference detecting unit 530 is always integer. The interference detecting unit 530 provides the window adjusting unit 300 with such detected ISI. Based on the integer value provided by the interference detecting unit 530, the window adjusting unit 300 adjusts window timing of the FFT unit 400 for FFT of the OFDM signal. When the integer value is positive '+', the window adjusting unit 300, determining there is inter-symbol interference occurring, adjusts the window timing. If the integer value is negative '-', the window adjusting unit determines that there is no inter-symbol interference.

The delaying unit 540 delays the flow of value m from the factor computing unit 520 for a predetermined time. The subtracting unit 550 subtracts the second value currently output from the factor delaying unit 520 from the first output delayed by the delaying unit 540 for the predetermined time and output from the factor computing unit 520. If the first output from the factor computing unit 520 is $m_0$, and the second output is $m_1$, the subtracting unit 550 computes by the mathematical expression as follows:

[Mathematical expression 3]

$$D = m_1 - m_0$$

In other words, the factor computing unit 520 subtracts the output value $m_0$ delayed by the delaying unit 540 for the predetermined time from the output value $m_1$ currently output from the factor computing unit 520. The remainder D of the subtraction is output to the loop filter 560. The loop filter 560 counterbalances the series of remainders D within a predetermined range D', so that the remainders D can be maintained at an even interval. The loop filter 560 then outputs the counterbalanced remainders D to the interpolator 200. Based on the counterbalanced remainders from the loop filter 560, the interpolator 200 corrects the sampling offset occurring in the sampling of the ADC 100.

As described above, the two neighboring symbol timing offsets of the symbol timing offsets detected by the offset detecting unit 510 are multiplied respectively by two factors which are in crossfade relation with each other. The products of the multiplications are added up. Based on the sum such obtained, the value for adjusting the sampling offset and the FFT window timing can be computed. As a result, the error among the respective symbol offsets for the compensation in accordance with the change in the transmitting channel can be reduced.

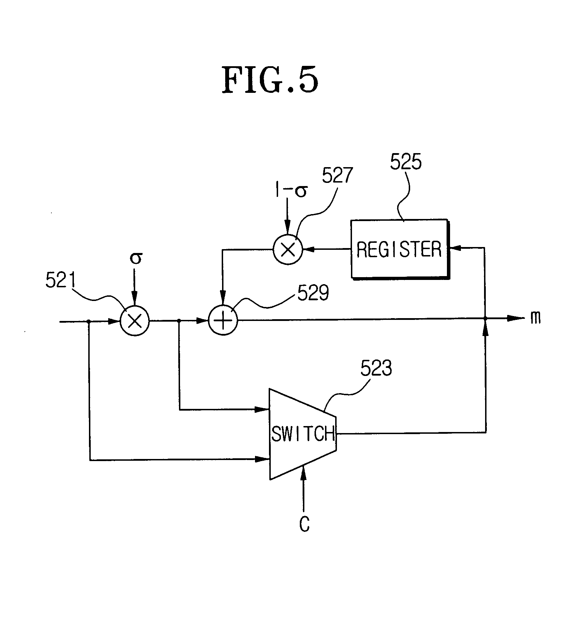

FIG. 5 is a block diagram showing the factor computing unit 520 of FIG. 4 in greater detail. The factor computing unit 520 includes a first multiplier 521, a switch 523, a register 525, a second multiplier 527 and an adder 529.

The first multiplier 521 multiplies the symbol timing offset detected by the offset detecting unit 510 by a factor σ. The switch 523 outputs the initial symbol timing offsets detected by the offset detecting unit 510 to outside or bypasses to the register 525 in accordance with a control signal C as input. The register 525 stores the symbol timing offsets bypassed and output from the switch 523. The second multiplier 527 multiplies the symbol timing offset stored in the register 525 by a factor 1-σ. The adder 529 adds the products from the first and second multipliers 521, 527 and output such obtained sum.

Let the first output of the symbol timing offsets detected by the offset detecting unit 510 be $x_0$, and the second output be $x_1$, the output from the factor computing unit 520 of FIG. 5 can be obtained by the following mathematical expression:

[Mathematical expression 4]

$$m_1 = \sigma \cdot x_1 + (1-\sigma) \cdot m_0$$

where, $m_0$ is the first output of the symbol timing offset $x_0$ output by the switch 523. In other words, values $m_0$ and $x_0$ are identical. Value $x_1$ is the second output of symbol timing offset from the offset detecting unit 510. Value $m_1$ is the output from the factor computing unit 520, which is computed by the input of the value $x_1$ to the factor computing unit 520. In other words, the output value $m_1$ from the factor computing unit 520 in accordance with the input of value $x_1$ corresponds to the sum of the product of multiplying the first output $m_0$ by the

factor 1 - σ and the product of multiplying the second output $x_1$ by the factor σ. Such computed value $m_1$ is bypassed to the register 525.

The following mathematical expression 5 explains the computation of the factor computing unit 520 in accordance with the third output $x_2$ of symbol timing offset from the offset detecting unit 510:

[Mathematical expression 5]

$$m_2 = \sigma \cdot x_2 + (1-\sigma) \cdot m_1$$

$$= \sigma \cdot x_2 + (1-\sigma) \cdot \{x_1 \cdot \sigma + (1-\sigma) \cdot m_0\}$$

$$= \sigma \cdot x_2 + \sigma(1-\sigma) \cdot x_1 + (1-\sigma)^2 \cdot m_0$$

where, $m_1$ is the output from the factor computing unit 520 in accordance with the input of the secondly output symbol timing offset $x_1$ from the offset detecting unit 510. Value $x_2$ is the thirdly output symbol timing offset from the offset detecting unit 510. Value $m_2$ is the output from the factor computing unit 520 in accordance with the input of value $x_2$ to the factor computing unit 520. In other words, the output $m_2$ from the factor computing unit in accordance with the input of value $x_2$ is the sum of product of multiplying the secondly output value $m_1$ stored in the register 525 from the factor computing unit 520 by the factor 1-σ and the product of multiplying the thirdly input value $x_2$ to the factor computing unit 520 by the factor σ. Such computed value $m_2$ is bypassed to the register 525. According to the preferred embodiment of the present invention, the factor computing unit 520 repeats the computations of outputs ($m=m_0,m_1,m_2, m_3,\cdots m_n$) with respect to the input symbol timing offsets ($x=x_0,x_1,x_2,x_3,\cdots,x_n$) with the mathematical expressions 4 and 5.

Let the initially input symbol timing offset to the factor computing unit 520 be $x_0$, and lastly input symbol timing offset be $x_n$, the proportion of the symbol timing offsets with respect to the outputs ($m= m_0,m_1,m_2,m_3, \cdots m_n$) are as follows:

During the bypass to the register 525, the weight of $x_0$ with respect to the outputs ($m=m_0,m_1,m_2, m_3,\cdots m_n$) decreases, while the weight of the newly input symbol timing offsets increases relatively. Compared to the outputs ($m = m_0,m_1,m_2,m_3,\cdots m_{n-1}$) bypassed to the register 525, the weight of the newly input symbol timing offsets decreases relatively.

As the newly input symbol timing offsets to the factor computing unit 520 are multiplied with the corresponding factor σ, and the output of the previously input symbol timing offsets is multiplied by the predetermined weight factor 1-σ and the products are added with each other, the weight of the newly input symbol timing offsets decreases, and the channel environment can become more stable. In addition, the recovery of symbol timing of the OFDM signal, which is usually distorted in the dynamic channel environment, can be performed reliably. At this point, the weight factor σ can be properly varied and controlled by a user.

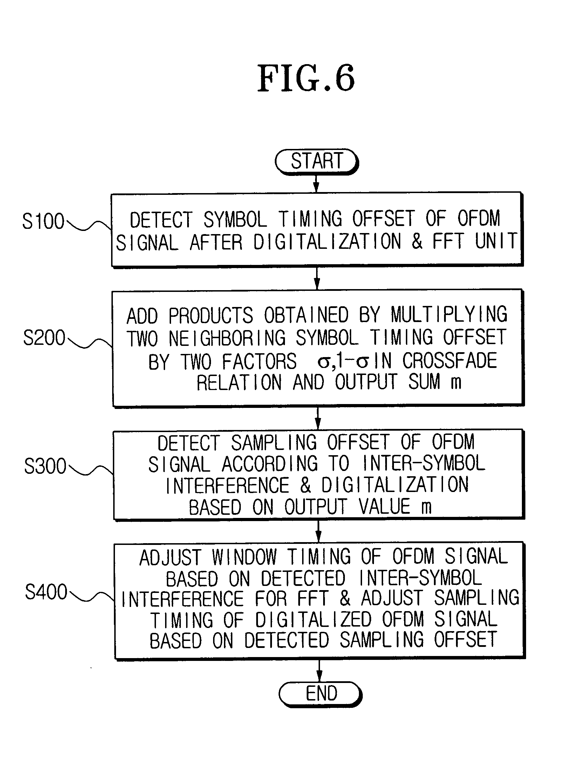

FIG. 6 is a flowchart showing the symbol timing recovering method of the OFDM signal using the symbol timing recovering apparatus of the OFDM receiver according to the present invention.

First, the offset detecting unit 510 detects the symbol timing offset of the OFDM signal, which is converted into the digital signal by the ADC 100 and fast Fourier transformed by the FFT unit 400 (step S100). At this time, the factor computing unit 520 multiplies the two neighboring symbol timing offsets of the symbol timing offsets detected by the offset detecting unit 510, by the two factors σ, 1-σ in crossfade relation with each other, and adds up and outputs the sum m of the products (step S200). The interference detecting unit 530 detects the inter-symbol interference (ISI) with the output m as the offset value (step S300). The interference detecting unit 530 provides the window adjusting unit 300 with the detected ISI. Meanwhile, with the two of the outputs m, the delaying unit 540 and the subtracting unit 550 compensate the sampling offsets occurring in the sampling of the ADC 100 converting the OFDM signals into digital signals. The loop filter 560 processes so that the neighboring sampling offsets can be maintained at an even interval and provides the interpolator 200 with the processed sampling offsets.

Based on the ISI detected by the interference detecting unit 530, the window adjusting unit 300 adjusts the window timing of the OFDM signal for FFT at the FFT unit 400 (step S400). The interpolator 200 adjusts the sampling timing of the digitalized OFDM signals based on the sampling offsets provided by the loop filter 560.

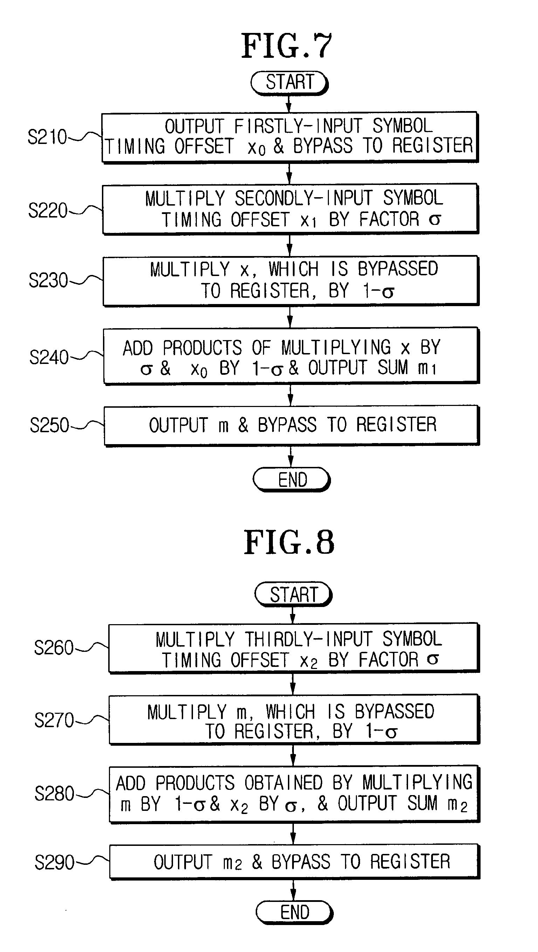

FIG. 7 is a flowchart showing the factor computing unit 520 operating in accordance with the first and second input of the symbol timing offsets from the offset detecting unit 510 in S200 of FIG. 6.

First, when the first symbol timing offset $x_0$ is input from the offset detecting unit 510, the factor computing unit 520 outputs the first input symbol timing offset $x_0$ to outside or bypasses to the register 525 (step S210). Meanwhile, when the second symbol timing offset $x_1$ is input from the offset detecting unit 510, the first multiplier 521 of the factor computing unit 520 multiplies the second input symbol timing offset $x_1$ by the weight factor σ (step S220). The second multiplier 527 of the factor computing unit 520 multiplies the first symbol timing $x_0$, which is bypassed to the register 525, by the weight factor 1 - σ (step S230).

The product of multiplying the second input symbol timing offset $x_1$ by the weight factor σ and the product of multiplying the first symbol timing $x_0$ by the weight factor 1 - σ are added with each other (step S240). The sum of the two products from the adder 529 is output value $m_1$ from the factor computing unit 520. The adder 529 outputs the output value $m_1$ to the out-

side, and bypasses to the register 525 (step S250).

FIG. 8 is a flowchart showing the factor computing unit 520 operating in accordance with the third input of symbol timing offset from the offset detecting unit 510 after S250 of FIG. 7.

First, the first multiplier 521 of the factor computing unit 520 multiplies the third input $x_2$ of the symbol timing offset by the weight factor $\sigma$ (step S260). The second multiplier 527 multiplies the output $m_1$, bypassed to the register 525, by the weight factor $1-\sigma$ (step S270).

The adder 529 adds the products by the first and second multipliers 521, 527 in accordance with the input of the third symbol timing offset $x_2$ (step S280). The sum obtained by the adder 529 is the output value $m_2$ of the factor computing unit 520. The adder 529 outputs the secondly obtained output value $m_2$ to the outside, and bypasses to the register 525.

As described above, the previously input symbol timing offset and currently input symbol timing offset is multiplied by the corresponding weight factors which are in crossfade relation with each other. The products of the multiplications are added. Based on the sum of the products as obtained, the ISI and sampling offset are detected, and accordingly, the error change of the timing offset among the symbols by the environment change of the transmitting channel can be reduced.

According to the present invention, the two neighboring symbol timing offsets of the symbol timing offsets detected by the offset detecting unit 510 are multiplied respectively by two factors which are in crossfade relation with each other. The products of the multiplications are added up. Based on the sum such obtained, the value for adjusting the sampling offset and the FFT window timing can be computed. As a result, the error among the respective symbol offsets for the compensation in accordance with the change in the transmitting channel can be reduced.

As the newly input symbol timing offsets to the factor computing unit 520 are multiplied with the corresponding factor $\sigma$, and the output of the previously input symbol timing offsets is multiplied by the predetermined weight factor $1 - \sigma$ and the products are added with each other, the weight of the newly input symbol timing offsets decreases, and the channel environment can become more stable. In addition, the recovery of symbol timing of the OFDM signal, which is usually distorted in the dynamic channel environment, can be performed reliably.

**Claims**

1.  A symbol timing recovering apparatus (500) of an orthogonal frequency division multiplexing (OFDM) receiver, comprising:

    an offset detecting unit (510) for detecting a symbol timing offset from an OFDM signal which is fast Fourier transformed;

    a factor computing unit (520) for multiplying a first symbol timing offset by a first weight factor and a second symbol timing offset by a second symbol timing offset, and adding and outputting products of multiplications, the first and second symbol timing offset sequentially input from the offset detecting unit;

    a distortion detecting unit for detecting an inter-symbol interference and a sampling offset value of the OFDM signal due to an environment of a transmitting channel, based on the outputs from the factor computing unit;

    a window adjusting unit (300) for adjusting a window timing of the symbol of the OFDM signal based on the inter-symbol interference; and

    an interpolator (200) for correcting the sampling timing of the OFDM signal based on the sampling offset value.

2.  The symbol timing recovering apparatus of claim 1, wherein the distortion detecting unit comprises:

    an interference detecting unit (530) for detecting an integer value corresponding to the respective inter-symbol interference of the OFDM signals with the outputs from the factor computing unit as an offset value, and providing the window adjusting unit with the detected integer value; and

    a sampling offset detecting unit for calculating a decimal value corresponding to the sampling offset occurring in the process of sampling by calculating a difference of the outputs which are sequentially input to the sampling offset detecting unit, and providing the interpolator with the decimal value.

3.  The symbol timing recovering apparatus of claim 2, wherein the sampling offset detecting unit comprises:

    a delaying unit (540) for delaying a first output of the outputs for a predetermined time before outputting the first output and until a second output of the outputs is input, the second output following the first output; and

    a subtracting unit (550) for calculating the decimal value corresponding to the sampling offset value by subtracting the first output, delayed by the delaying unit, from the second output.

4.  The symbol timing recovering apparatus of claim 3, wherein the sampling offset detecting unit further comprises a loop filter (560) for counterbalancing the decimal value within a predetermined limit so that decimal values sequentially calculated by the subtracting unit can be maintained at an even interval.

5. The symbol timing recovering apparatus of any of claims 1 to 4, wherein the factor computing unit comprises:

a register (525) for storing a first symbol timing offset for a predetermined time before outputting and until a second symbol timing offset is input, the second symbol timing offset following the first symbol timing offset;
a first multiplier (521) for multiplying the second symbol timing offset by the first weight factor;
a second multiplier (527) for multiplying the first symbol timing offset from the register by the second weight factor; and
an adder (529) for calculating the outputs by adding the products from first and second multipliers, and outputting the calculated outputs to outside and bypassing to the register.

6. The symbol timing recovering apparatus of claim 5, wherein the factor computing unit further comprises a switching unit (523) for outputting an initial input of the symbol timing offset to outside and bypassing to the register in accordance with a control signal.

7. The symbol timing recovering apparatus of any of claims 1 to 6, wherein the sum of first and second weight factors is '1'.

8. The symbol timing recovering apparatus of claim 7, wherein the first and second weight factors are equal to, or greater than '0', and equal to, or less than '1'.

9. An orthogonal frequency division multiplexing (OFDM) receiver, comprising:

an analogue-to-digital converter (ADC) (100) for converting received OFDM signals into digital signals;
a fast Fourier transforming (FFT) unit (400) for fast Fourier transforming the digitalized OFDM signals;
an offset detecting unit (510) for detecting a symbol timing offset of the fast Fourier transformed OFDM signals;
a factor computing unit (520) for multiplying a first symbol timing offset by a first weight factor and a second symbol timing offset by a second symbol timing offset, and adding and outputting products of multiplication, the first and second symbol timing offset sequentially input from the offset detecting unit;
a distortion detecting unit for detecting an inter-symbol interference and a sampling offset value of the OFDM signal based on the outputs from the factor computing unit;
a window adjusting unit (300) for adjusting a window timing of the symbol of the OFDM signal based on the inter-symbol interference; and
an interpolator (200) for correcting the sampling timing of the OFDM signal based on the sampling offset value.

10. The OFDM receiver of claim 9, wherein the distortion detecting unit comprises:

an interference detecting unit (530) for detecting an integer value corresponding to the inter-symbol interference of the respective OFDM signals with the outputs from the factor computing unit as an offset value, and providing the window adjusting unit with the detected integer value; and
a sampling offset detecting unit for calculating a decimal value corresponding to the sampling offset occurring in the process of sampling by calculating a difference of the outputs which are sequentially input to the sampling offset detecting unit, and providing the interpolator with the decimal value.

11. The OFDM receiver of claim 10, wherein the sampling offset detecting unit comprises:

a delaying unit (540) for delaying a first output of the outputs for a predetermined time before outputting the first output and until a second output of the outputs is input, the second output following the first output; and
a subtracting unit (550) for calculating the decimal value corresponding to the sampling offset value by subtracting the first output, delayed by the delaying unit, from the second output.

12. The OFDM receiver of claim 11, wherein the sampling offset detecting unit comprises a loop filter (560) for counterbalancing the decimal value within a predetermined limit so that decimal values sequentially calculated by the subtracting unit can be maintained at an even interval.

13. The OFDM receiver of any of claims 9 to 12, wherein the factor computing unit comprises:

a register (525) for storing a first symbol timing offset for a predetermined time before outputting and until a second symbol timing offset is input, the second symbol timing offset following the first symbol timing offset;
a first multiplier (521) for multiplying the second symbol timing offset by the first weight factor;
a second multiplier (527) for multiplying the first symbol timing offset from the register by the second weight factor; and
an adder (529) for calculating the outputs by adding the products from first and second multipliers, and outputting the calculated outputs to outside and bypassing to the register.

14. The OFDM receiver of claim 13, wherein the factor computing unit comprises a switching unit (523) for outputting an initial input of the symbol timing offset to outside and bypassing to the register in accordance with a control signal.

15. The OFDM receiver of any of claims 9 to 14, wherein the sum of first and second weight factors is '1'.

16. The OFDM receiver of claim 15, wherein first and second weight factors are equal to, or greater than '0', and equal to, or less than '1'.

17. A symbol timing recovering method using a symbol timing recovering apparatus, comprising the steps of:

    a) detecting a symbol timing offset from an OFDM signal which is fast Fourier transformed;
    b) multiplying a first symbol timing offset by a first weight factor and a second symbol timing offset by a second symbol timing offset, and adding and outputting products of multiplication, the first and second symbol timing offset sequentially input from the offset detecting unit;
    c) detecting an inter-symbol interference and a sampling offset value of the OFDM signal due to an environment of a transmitting channel, based on the outputs from the factor computing unit; and
    d) adjusting a window timing of the symbol of the OFDM signal based on the inter-symbol interference, and correcting the sampling timing of the OFDM signal based on the sampling offset value.

18. The symbol timing recovering method of claim 17, wherein the step c) comprises the steps of:

    detecting an integer value corresponding to the inter-symbol interference of the respective OFDM signals with the outputs from the factor computing unit as an offset value; and
    calculating a decimal value corresponding to the sampling offset occurring in the process of sampling by calculating a difference of the outputs which are sequentially input to the sampling offset detecting unit.

19. The symbol timing recovering method of claim 18, wherein the decimal value calculating step comprises the steps of:

    delaying a first output of the outputs for a predetermined time before outputting the first output and until a second output of the outputs is input, the second output following the first output;
    calculating the decimal value corresponding to the sampling offset value by subtracting the first output from the second output; and
    counterbalancing the decimal value within a predetermined limit.

20. The symbol timing recovering method of any of claims 17 to 19, wherein the step b) comprises the steps of:

    storing a first symbol timing offset for a predetermined time before outputting and until a second symbol timing offset is input, the second symbol timing offset following the first symbol timing offset;
    multiplying the second symbol timing offset by the first weight factor;
    multiplying the first symbol timing offset from the register by the second weight factor; and
    calculating the outputs by adding the products from first and second multipliers, and outputting the calculated outputs to outside and storing the same for a predetermined time according to the storing step.

21. The symbol timing recovering method of any of claims 17 to 20, wherein the sum of first and second weight factors is '1'.

22. The symbol timing recovering method of claim 21, wherein first and second weight factors are equal to, or greater than '0', and equal to, or less than '1'.

EP 1 330 087 A2

FIG.1

10 ADC
20 INTERPOLATOR
30 WINDOW ADJUSTING UNIT
40 FFT UNIT
50 ERROR DETECTING UNIT
60 EQUALIZER
70 FEC

# FIG.2

50

56       54       52

| INTERFERENCE DETECTING UNIT | ← | SLIDING ADDER | ← | OFFSET DETECTING UNIT |

| DIFFERENCE CALCULATING UNIT | 58

# FIG.3

| ADDER | → | DIVIDER |

54a            54b

# FIG.4

EP 1 330 087 A2

# FIG.5

# FIG.6

```
        ( START )
            │
            ▼
```

S100 — DETECT SYMBOL TIMING OFFSET OF OFDM SIGNAL AFTER DIGITALIZATION & FFT UNIT

S200 — ADD PRODUCTS OBTAINED BY MULTIPLYING TWO NEIGHBORING SYMBOL TIMING OFFSET BY TWO FACTORS $\sigma, 1-\sigma$ IN CROSSFADE RELATION AND OUTPUT SUM m

S300 — DETECT SAMPLING OFFSET OF OFDM SIGNAL ACCORDING TO INTER-SYMBOL INTERFERENCE & DIGITALIZATION BASED ON OUTPUT VALUE m

S400 — ADJUST WINDOW TIMING OF OFDM SIGNAL BASED ON DETECTED INTER-SYMBOL INTERFERENCE FOR FFT & ADJUST SAMPLING TIMING OF DIGITALIZED OFDM SIGNAL BASED ON DETECTED SAMPLING OFFSET

```
            │
            ▼
        ( END )
```

# FIG.7

START

S210 — OUTPUT FIRSTLY-INPUT SYMBOL TIMING OFFSET $x_0$ & BYPASS TO REGISTER

S220 — MULTIPLY SECONDLY-INPUT SYMBOL TIMING OFFSET $x_1$ BY FACTOR $\sigma$

S230 — MULTIPLY x, WHICH IS BYPASSED TO REGISTER, BY $1-\sigma$

S240 — ADD PRODUCTS OF MULTIPLYING x BY $\sigma$ & $x_0$ BY $1-\sigma$ & OUTPUT SUM $m_1$

S250 — OUTPUT m & BYPASS TO REGISTER

END

# FIG.8

START

S260 — MULTIPLY THIRDLY-INPUT SYMBOL TIMING OFFSET $x_2$ BY FACTOR $\sigma$

S270 — MULTIPLY m, WHICH IS BYPASSED TO REGISTER, BY $1-\sigma$

S280 — ADD PRODUCTS OBTAINED BY MULTIPLYING m BY $1-\sigma$ & $x_2$ BY $\sigma$, & OUTPUT SUM $m_2$

S290 — OUTPUT $m_2$ & BYPASS TO REGISTER

END